# FASCICULE DE BREVET EUROPEEN

(11) **EP 0 249 559 B1**
(45) Date de publication et mention de la délivrance du brevet: **24.08.1994**
(21) Numéro de dépôt: 87401317.0
(22) Date de dépôt: 11.06.1987
(51) Int. Cl.: F15B 9/03, G05D 3/14

(54) **Procédé et dispositif d'asservissement en position d'un verin pneumatique**
Verfahren und Vorrichtung zur Lagesteuerung eines pneumatischen Stellgliedes
Method and device for the position control of a pneumatic actuator

(30) Priorité: 12.06.1986 FR 8608513
(43) Date de publication de la demande: 16.12.1987
(73) Titulaire: BERTIN & CIE, F-78373 Plaisir Cédex (FR)
(72) Inventeur: Facon, Pierre, F-78000 Versailles (FR)
(74) Mandataire: Ramey, Daniel

(56) Documents cités:
- EP-A- 0 123 391
- WO-A-81/00601
- FR-A- 2 421 414
- GB-A- 2 086 085
- GB-A- 2 111 253
- US-A- 4 164 167

## Description

L'invention concerne un procédé et un dispositif d'asservissement en position d'un vérin pneumatique utilisé pour déplacer une charge, par exemple en robotique.

Jusqu'à présent, les vérins pneumatiques ont été utilisés à grande échelle dans l'industrie comme actionneurs tout ou rien, en raison de leur robustesse, de leur faible prix de revient et de leur commodité d'alimentation en air comprimé.

On connaît, par les documents EP-A-0123391 et GB-A-2 086 085, des procédés d'asservissement de manipulateurs à vérins hydrauliques, qui consistent, pour chaque axe de déplacement d'un manipulateur, à mesurer la position, la vitesse et l'accélération du manipulateur, a élaborer des signaux de commande de position, de commande de vitesse et de commande d'accélération, à déterminer l'inertie du manipulateur ou d'un élément mobile de celui-ci et à corriger en fonction de cette inertie des signaux de commande de position et de commande d'accélération pour élaborer finalement un signal de commande de l'actionneur hydraulique du manipulateur.

On a déjà tenté d'asservir des vérins pneumatiques en position comme des vérins hydrauliques, mais on s'est alors heurté à des difficultés provenant de la compressibilité de l'air ou du gaz contenu dans le vérin pneumatique, qui se sont traduites par une instabilité et un manque de raideur du vérin pneumatique, d'où des oscillations de part et d'autre de la position de consigne.

L'invention a notamment pour objet un procédé et un dispositif d'asservissement en position d'un vérin pneumatique, permettant d'éviter ces inconvénients.

Elle propose à cet effet un procédé d'asservissement en position d'un vérin, consistant à déterminer la position, la vitesse, l'accélération et l'inertie de l'organe mobile (16) du vérin (14), à comparer cette position à une position de consigne pour établir leur différence, et à prendre en compte cette différence, ainsi que la vitesse, l'accélération et l'inertie de l'organe mobile pour élaborer un signal de commande d'un distributeur (10) alimentant le vérin en fluide sous pression, de façon à éviter les oscillations de l'organe mobile (16), caractérisé en ce que le vérin (14) est un vérin pneumatique alimenté en air ou en gaz sous pression par le distributeur (10), et en ce que son procédé d'asservissement comprend une phase initiale durant laquelle le vérin (14) est alimenté par un débit prédéterminé constant, par exemple maximum, d'air ou de gaz sous pression pour déplacer l'organe mobile (16) à partir d'une position d'arrêt complet et durant laquelle on détermine l'inertie de l'organe mobile puis, en fonction de cette inertie, des facteurs de correction de la vitesse et de l'accélération de l'organe mobile et on élabore le signal de commande du distributeur (10) à partir de la différence précitée entre la position de l'organe mobile (16) et la position de consigne, ainsi qu'à partir des vitesse et accélération de l'organe mobile modifiées par application des facteurs de correction précités, le procédé comprenant également une phase intermédiaire durant laquelle l'organe mobile (16) continue sa course vers sa position de consigne et le vérin (14) est alimenté par le débit précité d'air ou de gaz sous pression, l'asservissement n'ayant pas d'effet sur le distributeur, et une phase finale durant laquelle les facteurs de correction de vitesse et d'accélération pris en compte dans l'élaboration du signal de commande du distributeur (10) ont un effet sur cette commande et où l'organe mobile atteint la position de consigne et s'y arrête sans oscillation.

La mesure de l'inertie de l'organe mobile, qui varie en fonction de la charge déplacée, et sa prise en compte pour la correction des termes de vitesse et d'accélération dans la boucle d'asservissement permettent d'éviter des oscillations de l'organe mobile du vérin et d'obtenir une bonne stabilité et une bonne raideur de l'asservissement. La précision est améliorée par le fait que l'on peut déterminer ou corriger le signal de commande du distributeur plus rapidement à partir d'une mesure d'accélération qu'à partir d'une mesure de vitesse. L'asservissement est en outre automatiquement adaptable à l'importance de la charge déplacée par le vérin.

Dès le début de chaque nouvelle course de l'organe mobile du vérin, l'inertie de la masse déplacée est déterminée et les facteurs correspondants de correction des termes de vitesse et d'accélération de l'asservissement sont calculés ou déterminés; mais ils n'auront d'effet sur l'asservissement que quand la masse déplacée ou l'organe mobile du vérin aura atteint un point relativement peu éloigné du point d'arrivée et à partir duquel il faut commencer à modifier l'alimentation du vérin pour obtenir l'arrêt de la charge au point voulu et dans les meilleures conditions, c'est à dire dans le minimum de temps sans à-coups ni oscillations.

Comme on détermine l'inertie de l'ensemble mobile déplacé par le vérin, par mesure de l'accélération initiale de l'organe mobile du vérin lorsque le distributeur alimente le vérin par un débit prédéderminé constant, par exemple maximum, d'air ou de gaz sous pression, le démarrage de l'organe mobile du vérin se fait toujours dans les mêmes conditions d'alimentation du vérin et, d'autre part, on accélère le début du déplacement de l'organe mobile.

En pratique, l'invention sera le plus souvent utilisée dans des cas où il faut déplacer une charge d'un point à un autre le plus rapidement possible, sans à coups et sans oscillations de part et d'autre du point d'arrivée, revenir à vide ou avec une charge différente au point de départ, repartir vers l'autre point, etc.

L'invention prévoit également de comparer l'inertie de la masse déplacée à des valeurs prédéterminées et de choisir, en fonction des résultats de cette comparaison, des facteurs prédéterminés correspondants de correction de vitesse et d'accélération qui sont conservés jusqu'à l'arrêt de l'organe mobile.

En effet, les valeurs de ces facteurs de correction ne sont pas particulièrement critiques, et il suffit de disposer de plusieurs valeurs de ces facteurs, correspondant à plusieurs valeurs d'inertie des masses qui sont susceptibles d'être déplacées par le vérin.

L'invention propose également un dispositif d'asservissement en position d'un vérin, comprenant des moyens (30, 34) de détermination de la position, de la vitesse, de l'accélération et de l'inertie de l'organe mobile (16) du vérin, des moyens (22) de détermination de la différence entre la position de l'organe mobile (16) et une position de consigne, et un circuit (20) de commande d'un distributeur (10) d'alimentation du vérin (14) en fluide sous pression, le circuit de commande élaborant un signal de commande du distributeur (10) à partir de la différence précitée de position, de la vitesse, de l'accélération et de l'inertie de l'organe mobile, de façon à éviter les oscillations de cet organe mobile, caractérisé en ce que le vérin (14) est un vérin pneumatique alimenté par le distributeur (10) en air ou en gaz sous pression, le dispositif d'asservissement comprend des moyens (34) de mesure de l'accélération de l'organe mobile (16) au début de son déplacement pour une alimentation du vérin par un débit prédéterminé, par exemple maximum, d'air ou de gaz sous pression, et le circuit de commande (20) comprend des moyens de détermination de facteurs de correction de la vitesse et de l'accélération de l'organe mobile en fonction de l'inertie de celui-ci, et d'élaboration du signal de commande du distributeur (10) à partir de la différence de position précitée et à partir des vitesse et accélération de l'organe mobile modifiées par application des facteurs de correction précités, ces facteurs de correction ayant un effet sur le signal de commande lors de la phase finale de déplacement de l'organe mobile à l'issue de laquelle l'organe mobile atteint la position de consigne et s'y arrête sans oscillation.

Le circuit de commande peut comprendre également des moyens de comparaison de l'inertie de la masse déplacée à des valeurs prédéterminées, et des moyens de réglage ou de choix de valeurs correspondantes des facteurs de correction de vitesse et d'accélération.

Avantageusement, le capteur d'accélération est du type comprenant une masse montée sur une lame flexible, sur la base de laquelle sont fixées des jauges de contrainte.

Le circuit de commande peut être du type analogique, ou bien du type numérique, au quel cas le capteur d'accélération est relié par un convertisseur analogique-numérique au circuit de commande.

L'invention est applicable aussi bien à l'asservissement d'un vérin pneumatique linéaire qu'à celui d'un vérin pneumatique rotatif. La précision et la stabilité de l'asservissement du déplacement de l'organe mobile du vérin permettent des applications intéressantes en robotique.

D'autres caractéristiques, détails et avantages de l'invention apparaitront à la lecture de la description qui va suivre, faite à titre d'exemple en référence aux dessins annexés et dans lesquels :
La figure 1 représente schématiquement un dispositif d'asservissement en position d'un vérin pneumatique linéaire selon l'invention.
Les figures 2 et 3 sont des vues, de face et en élévation, d'un capteur d'accélération utilisé dans le dispositif de la figure 1.
Les figures 4 et 5 sont des vues, en coupe et de face d'un vérin pneumatique rotatif commandé par un dispositif selon l'invention;
Les figures 6 et 7 sont des vues, en élévation et de face respectivement, d'une application de l'invention en robotique.

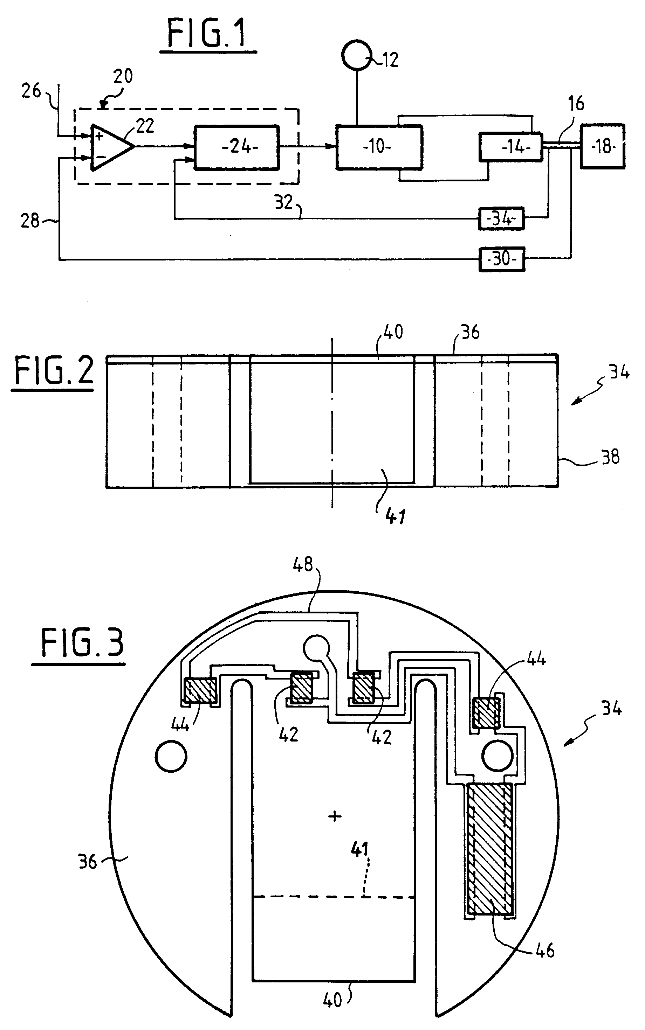

On fera d'abord référence à la figure 1, qui représente schématiquement un dispositif d'asservissement en position d'un vérin pneumatique, conforme à l'invention.

Ce dispositif comprend un distributeur pneumatique 10 relié, d'une part, à une source 12 d'air ou de gaz sous pression et, d'autre part, aux orifices d'alimentation d'un vérin pneumatique 14 du type à déplacement linéaire de son organe mobile, constitué ici par une tige de piston 16 utilisée pour déplacer une charge 18 dont la masse peut varier.

Le distributeur pneumatique 10 est du type à action proportionnelle et comprend par exemple un tiroir coulissant dans une chemise. Le déplacement du tiroir est commandé par un électro-poussoir associé à un ressort de rappel, et est approximativement proportionnel à l'intensité d'un courant électrique circulant dans la bobine d'excitation de l'electro-poussoir. Ainsi, le distributeur alimente l'un ou l'autre des orifices du vérin 14 par un débit de gaz sous pression qui est sensiblement proportionnel au déplacement du tiroir.

Pour éviter toute perturbation dûe aux frottements du tiroir dans la chemise du distributeur, un signal électrique en créneau carré ayant une fréquence appropriée (par exemple de l'ordre de 100 Hz) est superposé au signal de commande du distributeur. Il provoque une vibration du tiroir qui élimine les conséquences des frottements.

Le signal de commande du distributeur est fourni par un circuit de commande 20 comprenant un comparateur 22 et un circuit correcteur 24 . Une entrée du comparateur 22 reçoit un signal de consigne 26 correspondant à une position de consigne de l'organe mobile 16 du vérin 14, et l'autre entrée de ce comparateur reçoit un signal 28 de position réelle de l'organe mobile 16, fourni par un capteur de position 30 associé à cet organe mobile, ce capteur de position 30 pouvant être du type analogique, par exemple un potentiomètre, ou bien du type numérique, par exemple un codeur optique.

Le signal de sortie du comparateur 22 est transmis à une entrée du circuit correcteur 24, dont une autre entrée reçoit un signal 32 fourni par un capteur d'accélération 34 associé à l'organe mobile 16 du vérin.

Ce capteur d'accélération 34 peut être par exemple du type de celui représenté dans les figures 2 et 3, qui comprend une plaquette 36, par exemple de céramique, montée sur un support 38. La plaquette de céramique comprend une lame flexible 40 à l'extrêmité de laquelle est fixée une masselotte 41. Deux jauges de contrainte 42 sont montées sur la base de la lame flexible 40, c'est à dire dans sa partie soumise à des contraintes en fonction de l'accélération de l'organe mobile 16 du vérin, et sont reliées à deux autres jauges de contrainte 44 montées sur la plaquette 36 dans des zones non soumises à des contraintes en fonction de l'accélération, ainsi qu'à une jauge de contrainte 46, permettant une compensation en température, montée sur une partie non déformable de la plaquette 36. Les jauges de contrainte 42, 44 et 46 peuvent être déposées par sérigraphie sur la plaquette 36 et sont reliées entre elles, pour former un pont de mesure, par un circuit imprimé 48 également réalisé par impression par sérigraphie.

Des butées mécaniques, non représentées, limitent l'amplitude de la déformation de la lame flexible 40, en cas de choc, pour éviter sa rupture.

Le circuit correcteur 24 (figure 1) élabore le signal de commande du distributeur pneumatique 10 à partir du signal de différence entre le signal de consigne 26 et le signal de position 28, d'un signal de vitesse de déplacement de l'organe mobile 16 qui est la dérivée du signal de différence précité, du signal d'accélération 32 fourni par le capteur 34 et éventuellement, pour augmenter la précision statique, d'un terme intégral du signal de différence précité.

Lorsque le circuit correcteur 24 est duy type analogique, le signal d'accélération 32 fourni par le capteur peut être appliqué directement à l'une de ses entrées. Par contre, si le circuit correcteur 24 est du type numérique (par exemple un microprocesseur du type disponsible dans le commerce sous forme d'un circuit intégré), la sortie du capteur 34 est reliée par un convertisseur analogique-numérique à l'entrée correspondante du circuit correcteur 24.

Le signal de commande appliqué au distributeur pneumatique 10 par le circuit correcteur 24 doit également tenir compte de l'inertie de l'ensemble mobile 16, 18 du vérin 14.

L'invention prévoit de déterminer l'inertie de cet ensemble par la mesure de l'accélération initiale de l'organe 16, au début de son déplacement. En effet, les proportions ou les gains des signaux de vitesse et d'accélération dans le circuit correcteur 24 doivent être fonction de l'inertie de la charge déplacée par le vérin. Lorsque cette inertie est grande, il est nécessaire d'accroître les proportions des signaux de vitesse et d'accélération par rapport au signal de différence de position. Inversement, lorsque cette inertie est faible ou quasi nulle, il est préférable de diminuer ces deux signaux pour avoir un fonctionnement optimal.

L'invention permet alors une adaptation automatique de la fonction de transfert du dispositif d'asservissement à l'importance de l'inertie de la charge déplacée par le vérin.

Pour cela, l'invention prévoit d'alimenter le vérin 14 par un débit prédéterminé constant de gaz sous pression au début du déplacement de la charge 18 qui peut être le débit maximum pour réduire le temps total du déplacement de la charge d'un point à un autre. Le signal d'accélération fourni par le capteur 34 est alors inversement proportionnel à l'inertie totale des masses en mouvement. Grâce à la connaissance de cette inertie, on peut sélectionner ou calculer des proportions ou des gains correspondants des signaux de vitesse et d'accélération qui sont pris en compte pour l'élaboration du signal de commande du distributeur pneumatique. Ces proportions ou ces gains sont conservés jusqu'à l'arrêt du mouvement, et sont déterminés à nouveau lors du mouvement suivant.

L'adaptation à l'inertie totale des masses en mouvement peut se faire de façon discrète. Il suffit en effet de disposer de quelques valeurs des proportions ou des gains des signaux de vitesse et d'accélération pour couvrir toute la plage de fonctionnement du vérin, le règlage des termes vitesse et accélération dans le circuit correcteur n'étant pas particulièrement critique. On peut donc se contenter de comparer la valeur de l'accélération initiale à des seuils prédéterminés, pour savoir dans quelle plage de valeurs est comprise l'inertie totale des masses en mouvement et sélectionner les facteurs de correction des signaux de vitesse et d'accélération dans des tables de valeurs mises en mémoire.

L'asservissement en position du vérin pneumatique est réalisé de la façon suivante :
dans une première phase, au début de laquelle l'organe mobile est à l'arrêt dans une position de départ, le vérin est alimenté par un débit prédéterminé constant, par exemple maximum d'air ou de gaz sous pression et l'organe mobile 16 commence à se déplacer avec la charge 18 vers une position de consigne ou position d'arrivée. L'inertie de la masse totale déplacée par le vérin est déterminée par mesure de l'accélération initiale de l'organe mobile, et les facteurs de correction des signaux de vitesse et d'accélération sont déterminés comme indiqué plus haut.

Pendant la phase suivante, ou phase intermédiaire, qui est plus ou moins longue en fonction de la distance à parcourir, le vérin est alimenté par le débit prédéterminé constant d'air ou de gaz sous pression, le déplacement a lieu à vitesse sensiblement constante et le dispositif d'asservissement fonctionne, mais est complètement saturé car la différence entre le signal de position de consigne et le signal de position réelle est beaucoup plus importante que les signaux corrigés de vitesse et d'accélération qui n'ont pas d'effet sensible sur le signal de commande du distributeur.

Pendant la phase finale où l'on approche de la position de consigne ou position d'arrivée, les signaux corrigés de vitesse et d'accélération ne sont plus négligeables par rapport à la différence entre le signal de position réelle et le signal de position de consigne, et le distributeur alimente le vérin de façon à ce que l'organe mobile arrive à la position de consigne sans à-coups et s'y arrête sans oscillations dans un temps minimum.

L'invention est applicable à l'asservissement en position des vérins pneumatiques, quel que soit leur type. Il est cependant avantageux de pouvoir monter directement sur le vérin le distributeur 10 ainsi que le capteur de position 30 et le capteur d'accélération 34, de façon à obtenir un ensemble compact comprenant un minimum de connexions pneumatiques et électriques.

Dans le cas d'un vérin à déplacement linéaire, l'organe mobile peut être constitué par la tige de piston, de façon classique, le cylindre du vérin étant fixe, ou bien l'organe mobile peut être constitué par le cylindre du vérin, qui se déplace par rapport à la tige de piston maintenue fixe.

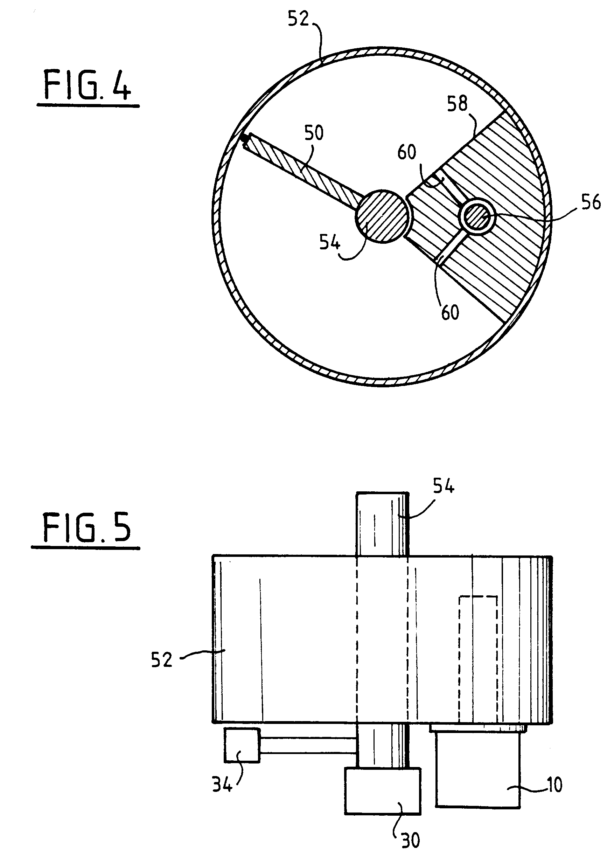

Dans le cas d'un vérin rotatif, et comme représenté dans les figures 4 et 5, l'organe rotatif peut être constitué par une palette 50 montée rotative autour de l'axe longitudinal d'un cylindre 52 et solidaire d'un arbre 54 dont une extrêmité est reliée à la charge à déplacer et dont l'autre extrêmité est associée au capteur de position 30 et au capteur d'accélération 34.

Le distributeur pneumatique 10 et son électro-poussoir de commande sont fixés sur le cylindre 52 du vérin, le tiroir 56 du distributeur étant monté coulissant dans un alésage d'une pièce 58 fixée à l'intérieur du cylindre 52 et formant butée limitant le déplacement de la palette 50 dans un sens ou dans l'autre, cette pièce 58 comprenant des canaux 60, décalés en hauteur, établissant une communication entre l'alésage dans lequel se déplace le tiroir 56 et les volumes internes du cylindre 52 séparés par la palette 50.

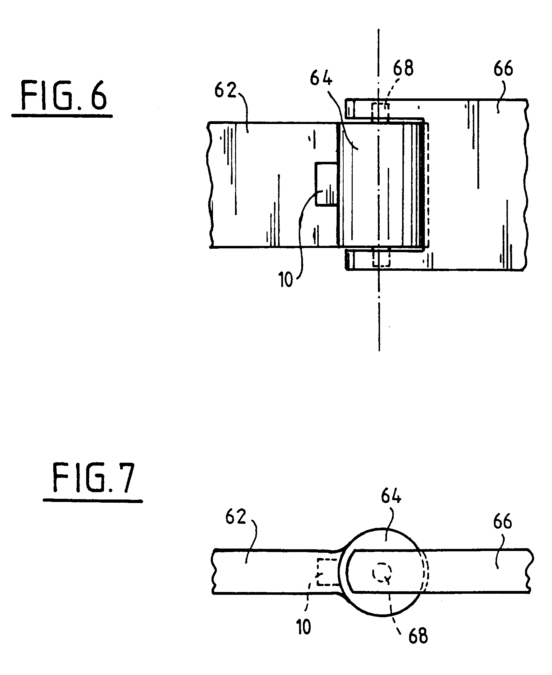

Les figures 6 et 7 représentent l'application d'un tel vérin rotatif à la commande en déplacement d'un bras de robot, comprenant par exemple un premier bras 62 solidaire du cylindre 64 du vérin rotatif et un second bras 66 solidaire en rotation de l'arbre mobile 68 du vérin. Comme précédemment, le distributeur 10 est monté sur le cylindre du vérin rotatif, tandis que les capteurs de position et d'accélération peuvent être associés à l'arbre 68 ou au deuxième bras 66 du robot. Le vérin rotatif constitue alors une articulation motrice reliant les bras 62 et 66.

## Revendications

1. Procédé d'asservissement en position d'un vérin, consistant à déterminer la position, la vitesse, l'accélération et l'inertie de l'organe mobile (16) du vérin (14), à comparer cette position à une position de consigne pour établir leur différence, et à prendre en compte cette différence, ainsi que la vitesse, l'accélération et l'inertie de l'organe mobile pour élaborer un signal de commande d'un distributeur (10) alimentant le vérin en fluide sous pression, de façon à éviter les oscillations de l'organe mobile (16), caractérisé en ce que le vérin (14) est un vérin pneumatique alimenté en air ou en gaz sous pression par le distributeur (10), et en ce que son procédé d'asservissement comprend une phase initiale durant laquelle le vérin (14) est alimenté par un débit prédéterminé constant, par exemple maximum, d'air ou de gaz sous pression pour déplacer l'organe mobile (16) à partir d'une position d'arrêt complet et durant laquelle on détermine l'inertie de l'organe mobile puis, en fonction de cette inertie, des facteurs de correction de la vitesse et de l'accélération de l'organe mobile et on élabore le signal de commande du distributeur (10) à partir de la différence précitée entre la position de l'organe mobile (16) et la position de consigne, ainsi qu'à partir des vitesse et accélération de l'organe mobile modifiées par application des facteurs de correction précités, le procédé comprenant également une phase intermédiaire durant laquelle l'organe mobile (16) continue sa course vers sa position de consigne et le vérin (14) est alimenté par le débit précité d'air ou de gaz sous pression, l'asservissement n'ayant pas d'effet sur le distributeur, et une phase finale durant laquelle les facteurs de correction de vitesse et d'accélération pris en compte dans l'élaboration du signal de commande du distributeur (10) ont un effet sur cette commande et où l'organe mobile atteint la position de consigne et s'y arrête sans oscillation.

2. Procédé selon la revendication 1, caractérisé en ce qu'il consiste à mesurer l'accélération de l'organe mobile (16) au moyen d'un accéléromètre (34) et à déterminer son inertie par mesure de son accélération initiale en début de course lorsque le vérin (14) est alimenté par le débit prédéterminé, par exemple maximum, d'air ou de gaz sous pression.

3. Procédé selon la revendication 1 ou 2, caractérisé en ce qu'il consiste à comparer l'inertie de l'organe mobile (16) à des valeurs prédéterminées et à choisir en fonction du résultat de cette comparaison des valeurs prédéterminées des facteurs de correction de vitesse et d'accélération.

4. Dispositif d'asservissement en position d'un vérin, comprenant des moyens (30, 34) de détermination de la position, de la vitesse, de l'accélération et de l'inertie de l'organe mobile (16) du vérin, des moyens (22) de détermination de la différence entre la position de l'organe mobile (16) et une position de consigne, et un circuit (20) de commande d'un distributeur (10) d'alimentation du vérin (14) en fluide sous pression, le circuit de commande élaborant un signal de commande du distributeur (10) à partir de la différence précitée de position, de la vitesse, de l'accélération et de l'inertie de l'organe mobile, de façon à éviter les oscillations de cet organe mobile, caractérisé en ce que le vérin (14) est un vérin pneumatique alimenté par le distributeur (10) en air ou en gaz sous pression, le dispositif d'asservissement comprend des moyens (34) de mesure de l'accélération de l'organe mobile (16) au début de son déplacement pour une alimentation du vérin par un débit prédéterminé, par exemple maximum, d'air ou de gaz sous pression, et le circuit de commande (20) comprend des moyens de détermination de facteurs de correction de la vitesse et de l'accélération de l'organe mobile en fonction de l'inertie de celui-ci, et d'élaboration du signal de commande du distributeur (10) à partir de la différence de position précitée et à partir des vitesse et accélération de l'organe mobile modifiées par application des facteurs de correction précités, ces facteurs de correction ayant un effet sur le signal de commande lors de la phase finale de déplacement de l'organe mobile à l'issue de laquelle l'organe mobile atteint la position de consigne et s'y arrête sans oscillation.

5. Dispositif selon la revendication 4, caractérisé en ce que les moyens de mesure de l'accélération comprennent un accéléromètre (34) associé à l'organe mobile (16) et relié à une entrée du circuit de commande (20).

6. Dispositif selon la revendication 4 ou 5, caractérisé en ce que les moyens de détermination de la vitesse comprennent des moyens de différentiation du signal de position.

7. Dispositif selon la revendication 4, 5 ou 6, caractérisé en ce que des tables de valeurs des facteurs de correction variant en fonction de l'inertie ou de l'accélération initiale de l'organe mobile, sont enregistrées dans une mémoire du circuit de commande.

8. Dispositif selon la revendication 5, caractérisé en ce que l'accéléromètre (34) est du type comprenant une masse montée sur une lame flexible (40) sur la base de laquelle sont fixées des jauges de contrainte (42).

9. Dispositif selon l'une des revendications 4 à 8, caractérisé en ce que le circuit de commande (20) est du type analogique.

10. Dispositif selon l'une des revendications 5 à 8, caractérisé en ce que le circuit de commande est du type numérique, et en ce que l'accéléromètre (34) lui est relié par un convertisseur analogique-numérique.

11. Dispositif selon l'une des revendications 4 à 10, caractérisé en ce que le vérin est du type rotatif et forme une articulation motrice à débattement angulaire limité, comprenant un cylindre (64) solidaire d'un premier bras (62) et un organe mobile rotatif (68) solidaire d'un second bras (66) relié au premier bras par cette articulation.

12. Dispositif selon des revendications 4 à 11, caractérisé en ce que le distributeur (10), le capteur de position (30) et l'accéléromètre (34) sont montés sur le vérin (14,52,64) et forment avec celui-ci un ensemble compact.

## Claims

1. A method of servo-controlling the position of an actuator, the method consisting in determining the position, the speed, the acceleration and the inertia of the moving member (16) of the actuator (14), in comparing said position with a reference position to establish their difference, and in taking account of said difference, together with the speed, the acceleration and the inertia of the moving member in order to generate a control signal for controlling a valve (10) feeding the actuator with fluid under pressure, in such a manner as to avoid oscillations of the moving member (16), the method being characterized in that the actuator (14) is a pneumatic actuator fed with air or gas under pressure by the valve (10), and in that its servo-control method comprises an initial stage during which the actuator (14) is fed at a predetermined constant flow rate, e.g. the maximum flow rate of air or gas under pressure, in order to displace the moving member (16) from a completely stopped position, and during which the inertia of the moving member is determined, then as a function of this inertia, moving member speed and acceleration correction factors are determined, and the control signal of the valve (10) is generated from the above-mentioned difference between the position of the moving member (16) and the reference position, and also from the speed and the acceleration of the moving member as modified by applying the above-mentioned correction factors, the method also comprising an intermediate stage during which the moving member (16) continues its stroke towards the reference position and the actuator (14) is fed at said flow rate of air or gas under pressure, with the servo-control having no effect on the valve, and a final stage during which said speed and acceleration correction factors taken into account while generating the control signal applied to the valve (10) have an effect on said control and where the moving member reaches the reference position and stops there without oscillating.

2. A method according to claim 1, characterized in that it consists in measuring the acceleration of the moving member (16) by means of an accelerometer (34), and in determining its inertia by measuring its initial acceleration at the beginning of its stroke while the actuator (14) is being fed with the predetermined flow rate, e.g. the maximum flow rate, of air or gas under pressure.

3. A method according to any one of claims 1 to 2, characterized in that it consists in comparing the inertia of the moving member (16) with predetermined values and in selecting pre-determined values of speed and acceleration correction factors as a function of the result of said comparison.

4. Apparatus for servo-controlling the position of an actuator, the apparatus comprising means (30, 34) for determining the position, the speed, the acceleration and the inertia of the moving member (16) of the actuator, means (22) for determining the difference between the position of the moving member (16) and a reference position, and a control circuit (20) for controlling a valve (10) for feeding the actuator (14) with fluid under pressure, the control circuit generating a control signal for controlling the valve (10) from the above-mentioned difference in position, speed, acceleration and inertia of the moving member, in such a manner as to avoid oscillations of said moving member, the apparatus being characterized in that the actuator (14) is a pneumatic actuator fed by the valve (10) with air or gas under pressure, the servo-control apparatus includes means (34) for measuring the acceleration of the moving member (16) at the beginning of its displacement when the actuator is fed with the air or gas under pressure at a predetermined feed rate, for example the maximum feed rate, and the control circuit (20) includes means for determining moving member speed and acceleration correction factors as a function of the inertia thereof, and for generating a control signal for the valve (10) from the above-mentioned position difference and from the speed and the acceleration of the moving member as modified by applying the above-mentioned correction factors, the said correction factors having an effect on the control signal during the final stage of displacement of the moving member at the end of which the moving member reaches the reference position and stops there without oscillating.

5. Apparatus according to claim 4, characterized in that the means for measuring the acceleration comprise an accelerometer (34) associated with the moving member (16) and connected to an input of the control circuit (20).

6. Apparatus according to claim 4 or 5, characterized in that the means for determining the speed comprise means for differentiating the position signal.

7. Apparatus according to claim 4, 5 or 6, characterized in that tables of values of correction factors varying as a function of the inertia or of the initial acceleration of the moving member are recorded in a memory of the control circuit.

8. Apparatus according to claim 5, characterized in that the accelerometer (34) is of the type comprising a mass mounted on a flexible blade (40) with strain gauges (42) being fixed to the base of the blade.

9. Apparatus according to any one of claims 4 to 8, characterized in that the control circuit (20) is of the analog type.

10. Apparatus according to any one of claims 5 to 8, characterized in that the control circuit is of the digital type, and in that the accelerometer (34) is connected thereto via an analog digital converter.

11. Apparatus according to any one of claims 4 to 10, characterized in that the actuator is of the rotary type and constitutes a driving joint of limited angular displacement, comprising a cylinder (64) fixed to a first arm (62) and a rotary moving member (68) fixed to a second arm (66) connected to the first arm via said joint.

12. Apparatus according to any one of claims 4 to 11, characterized in that the valve (10), the position sensor (30), and the accelerometer (34) are mounted on the actuator (14, 52, 64) and together therewith constitute a compact assembly.

## Patentansprüche

1. Verfahren zur Steuerung eines Stellgliedes, bestehend aus dem Bestimmen der Position, der Geschwindigkeit, der Beschleunigung und des Trägheitsmomentes des beweglichen Organs (16) des Stellgliedes (14), aus dem Vergleichen dieser Position mit einem Sollwert für die Position, um ihre Differenz zu bilden und aus dem Verknüpfen dieser Differenz, sowie der Geschwindigkeit, der Beschleunigung und des Trägheitsmomentes des beweglichen Organs, um ein Steuersignal für ein Wegeventil (10) zu bilden, weiches das Stellglied mit einem unter Druck stehenden Fluidum in der Weise versorgt, daß Oszillationsbewegungen des beweglichen Organs (16) vermieden werden, **dadurch gekennzeichnet, daß** das Steilglied (14) ein von dem Wegeventil (10) mit Druckluft oder einem unter Druck stehenden Gas versorgtes pneumatisches Stellglied ist **und daß** das Verfahren zu seiner Steuerung eine Anfangsphase aufweist, während welcher das Stellglied (14) mit einer vorbestimmten konstanten Menge, z.B. der Maximalmenge, von Druckluft oder unter Druck stehendem Gas versorgt wird, um das bewegliche Organ (16) ausgehend von einer vollständigen Haltestellung zu verschieben, und während welcher das Trägheitsmoment des Stellgliedes und nachfolgend abhängig von diesem Trägheitsmoment die Korrekturfaktoren für die Geschwindigkeit und die Beschleunigung des beweglichen Organs (16) bestimmt werden und ausgehend von der oben genannten Differenz zwischen der Position des beweglichen Organs (16) und der Soilposition, sowie ausgehend von der Geschwindigkeit und der Beschleunigung des beweglichen Organs, die durch Anwendung der vorgenannten Korrekturfaktoren modifiziert sind, ein Steuersignal für das Wegeventil (10) gebildet wird, wobei das Verfahren auch eine Zwischenphase, wahrend welcher das bewegliche Organ (16) seinen Weg zur Sollposition fortsetzt und das Stellglied (14) durch die oben genannte Menge von Druckluft oder unter Druck stehendem Gas versorgt wird, und eine Endphase aufweist, während welcher die Korrekturfaktoren für die Geschwindigkeit und die Beschleunigung, die bei der Bildung des Steuersignals für das Wegeventil (10) berücksichtigt werden, einen Einfluß auf die Steuerung ausüben, wodurch das bewegliche Organ, ohne Oszillationsbewegungen auszuführen, die Sollposition erreicht und dort anhält.

2. Verfahren nach Anspruch 1, **dadurch gekennzeichnet, daß** die Beschleunigung des beweglichen Organs (16) mittels eines Beschleunigungsaufnehmers (34) gemessen und sein Trägheitsmoment durch Messen seiner Anfangsbeschleunigung zu Beginn seines Weges bestimmt wird, nachdem das Stellglied (14) mit einer vorbestimmten Menge, beispielsweise der Maximalmenge von Druckluft oder unter Druck stehendem Gas versorgt wird.

3. Verfahren nach Anspruch 1 oder 2, **dadurch gekennzeichnet, daß** das Trägheitsmoment des beweglichen Organs (16) mit vorbestimmten Werten verglichen wird und in Abhängigkeit von diesem Vergleich vorgegebene Werte der Korrekturfaktoren für die Geschwindigkeit und die Beschleunigung ausgewählt werden

4. Vorrichtung zur Steuerung eines Stellgliedes, die Mittel (30, 34) zum Bestimmen der Position, der Geschwindigkeit, der Beschleunigung und des Trägheitsmomentes des beweglichen Organs (16) des Stellgliedes, Mittel (22) zum Bestimmen der Differenz zwischen der Position des beweglichen Organs (16) und einem Sollwert für die Position sowie eine Steuerschaltung (20) zur Steuerung eines Wegeventils (10) zur Versorgung des Stellgliedes (14) mit einem unter Druck stehenden Fluidum aufweist, wobei die Steuerschaltung ausgehend von der oben genannten Differenz der Position, der Geschwindigkeit, der Beschleunigung und des Trägheitsmomentes ein Steuersignal für ein Wegeventil (10) in der Weise bildet, daß Oszillationsbewegungen des beweglichen Organs vermieden werden**, dadurch gekennzeichnet, daß** das Stellglied (14) ein von dem Wegeventil (10) mit Druckluft oder einem unter Druck stehenden Gas versorgtes pneumatisches Stellglied ist, die Steuerungsvorrichtung Mittel (34) zum Messen der Beschleunigung des beweglichen Organs (16) zu Beginn seiner Verschiebung bei einer Versorgung des Stellgliedes durch eine vorbestimmte konstante Menge, z.B. der Maximalmenge, von Druckluft oder unter Druck stehendem Gas aufweist und die Steuerschaltung (20) Mittel zum Bestimmen von Korrekturfaktoren für die Geschwindigkeit und die Beschleunigung des beweglichen Organs in Abhängigkeit von seinem Trägheitsmoment und zum Bilden des Steuersignals für das Wegeventil (10) ausgehend von der Differenz der oben angeführten Position und der Geschwindigkeit und der Beschleunigung des beweglichen Organs aufweist, die durch Anwenden der genannten Korrekturfaktoren modifiziert sind, wobei diese Korrekturfaktoren während der Schlußphase der Verschiebung des beweglichen Organs einen Einfluß auf das Steuersignal ausüben, wodurch das bewegliche Organ, ohne Oszillationsbewegungen auszuführen, die Sollposition erreicht und dort anhält.

5. Vorrichtung nach Anspruch 4, **dadurch gekennzeichnet, daß** die Mittel zum Messen der Beschleunigung einen Beschleunigungsaufnehmer (34) aufweisen, welcher dem beweglichen Organ (16) zugeordnet und mit einem Eingang der Steuerschaltung (20) verbunden ist.

6. Vorrichtung nach Anspruch 4 oder 5, **dadurch gekennzeichnet, daß** die Mittel zum Bestimmen der Geschwindigkeit Mittel zum Differenzieren des Positionssignals aufweisen.

7. Vorrichtung nach Anspruch 4, 5 oder 6, **dadurch gekennzeichnet, daß** die in Abhängigkeit von dem Trägheitsmoment oder der Anfangsbeschleunigung des beweglichen Organs veränderlichen Wertetabellen für die Korrekturfaktoren in einem Speicher der Steuerschaltung enthalten sind.

8. Vorrichtung nach Anspruch 5, **dadurch gekennzeichnet, daß** der Beschleunigungsaufnehmer (34) in der Weise aufgebaut ist, daß er eine Masse aufweist, die an einem flexiblen Streifen (40) befestigt ist, an dessen Basis Dehnungsmeßstreifen (42) fixiert sind.

9. Vorrichtung nach einem der Ansprüche 4 bis 8, **dadurch gekennzeichnet, daß** die Steuerschaltung (20) eine Analogschaltung ist.

10. Vorrichtung nach einem der Ansprüche 5 bis 8, **dadurch gekennzeichnet, daß** die Steuerschaltung eine digitale Schaltung ist und daß der Beschleunigungsaufnehmer (34) über einen Analog/Digitalwandler an diese Schaltung angeschlossen ist.

11. Vorrichtung nach einem der Ansprüche 4 bis 10, **dadurch gekennzeichnet, daß** das drehbare Stellglied ein Triebwagengelenk mit einer Ausfederung innerhalb eines begrenzten Winkels ist, welches einen Zylinder (64) aufweist, der mit einem ersten Arm (62) und einem drehbaren beweglichen Organ (68) verbunden ist, welches mit einem mit dem ersten Arm über dieses Gelenk verbundenen zweiten Arm (66) in Verbindung steht.

12. Vorrichtung nach einem der Ansprüche 5 bis 11, **dadurch gekennzeichnet, daß** das Wegeventil (10), der Positionsgeber (30) und der Beschleunigungsaufnehmer (34) an dem Stellglied (14, 52, 64) befestigt sind und mit diesem eine kompakte Anordnung bilden.
